# EUROPEAN PATENT APPLICATION

(11) **EP 4 737 765 A1**
(43) Date of publication of application: **06.05.2026**
(21) Application number: 24210543.5
(22) Date of filing: 04.11.2024
(51) Int. Cl.: F16H 3/093, B60K 1/00, F16H 48/08

(54) **TRANSMISSION ARRANGEMENT WITH A CLUTCH CONCENTRIC TO A DIFFERENTIAL GEAR ARRANGEMENT**

(71) Applicant: Volvo Truck Corporation, 405 08 Göteborg (SE)
(72) Inventor: LIEBERUM, Nicholas, YORK SPRINGS, 17372 (US); BRANDT, Richard S, FAYETTEVILLE, 17222 (US); SKINNER, Sean, MARTINSBURG, 25404 (US); LAMBERTUS, Zachary, CHAMBERSBURG, 17201 (US)
(74) Representative: Kransell & Wennborg KB

(57) **Abstract**

The present disclosure relates to a transmission arrangement comprising an input shaft configured to be connected to an electric traction motor, a first countershaft and a second countershaft, each of the first and second countershafts being drivingly connected to the input shaft, wherein each of the first and second countershafts comprises a respective first and second countershaft gearwheel, a differential gear arrangement connected to an output shaft of the transmission arrangement, and a clutch arranged concentrically to the differential gear arrangement, wherein the transmission arrangement is configured to assume a first gear state in which the clutch connects the first countershaft gearwheel of each of the first and second countershafts to the differential gear arrangement, and a second gear state in which the clutch connects the second countershaft gearwheel of each of the first and second countershafts to the differential gear arrangement.

## Description

### TECHNICAL FIELD

The disclosure relates generally to transmission arrangements. In particular aspects, the disclosure relates to a transmission arrangement with a clutch concentric to a differential gear arrangement. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Propulsion systems for vehicles are continuously developed to meet the demands from the market. A particular aspect relates to the emission of environmentally harmful exhaust gases. Therefore, vehicles propelled by electric traction motors have been increasingly popular, both for cars as well as for heavy duty vehicles.

A transmission may conventionally be connected to the electric traction motor. There is however a desire to further improve such transmissions in relation to complexity and power ratio, especially for transmissions arranged in connection to a differential gear arrangement of the vehicle.

### SUMMARY

According to a first aspect of the disclosure, there is provided a transmission arrangement for an electrically propelled vehicle, the transmission arrangement comprising: an input shaft configured to be connected to an electric traction motor, a first countershaft and a second countershaft, each of the first and second countershafts being drivingly connected to the input shaft, wherein each of the first and second countershafts comprises a respective first and second countershaft gearwheel, a differential gear arrangement connected to an output shaft of the transmission arrangement, and a clutch arranged concentrically to the differential gear arrangement, wherein the transmission arrangement is configured to assume a first gear state in which the clutch connects the first countershaft gearwheel of each of the first and second countershafts to the differential gear arrangement, and a second gear state in which the clutch connects the second countershaft gearwheel of each of the first and second countershafts to the differential gear arrangement.

The first aspect of the disclosure may seek to provide a simple and less bulky transmission arrangement for a differential gear arrangement which can enable for a continuous and relatively high torque to the wheels of the vehicle. A technical benefit may include that the transmission arrangement can be switched between two gear states, while still obtaining a sufficient and relatively high peak torque. By providing two gear states, a less complex transmission arrangement can be provided. Also, arranging the clutch concentric to the differential gear arrangement and using the clutch to simultaneously engage e.g. the first countershaft gear wheel of each of the first and second countershafts to the differential gear arrangement, a higher torque can be provided to the differential gear arrangement compared to the use of a single countershaft. In detail, a torque load is acting on the differential gear arrangement from two countershafts simultaneously. Further, by using a two-gear state transmission arrangement, a continuous power flow to the wheels may be obtained, i.e. the transmission arrangement may enable for a solution which is substantially free from torque interruption when switching gears.

The wording "drivingly connected to" should be construed as two components being connected to each other such that when a first one of the components rotates, the second component also rotates. The two components may be directly connected to each other, or connected to each other via e.g. a third component.

Optionally in some examples, including in at least one preferred example, the transmission arrangement is further configured to assume a neutral gear state in which the clutch is disconnected from both of the first and second countershaft gearwheels of the first and second countershafts. A technical benefit may include that solely the differential gear arrangement rotates when the transmission arrangement assumes the neutral gear state. Hence, the differential gear arrangement rotates along with the rotation of the wheels but the first and second countershafts, as well as the input shaft may be maintained stationary or at least not rotating along with the rotation of the wheels. Hereby, there may be substantially no rotation of gearwheels and the efficiency may thus be improved. There may also be no need of providing a relatively high weight and costly hub disconnect functionality to the transmission arrangement.

Optionally in some examples, including in at least one preferred example, the input shaft comprises an input shaft gearwheel connected to each of the first and second countershafts. A technical benefit may include that a gear stage can be provided between the input shaft and the first countershaft as well as between the input shaft and the second countershaft.

Optionally in some examples, including in at least one preferred example, each of the first and second countershaft comprises a gearwheel arranged in meshing engagement with the input shaft gearwheel. A technical benefit may include that a gear stage can be provided between the input shaft and the first countershaft as well as between the input shaft and the second countershaft.

Optionally in some examples, including in at least one preferred example, the meshing engagement between the input shaft gearwheel and the gearwheels of the first and second countershaft form a respective reduction gear state. A technical benefit may include that a high torque electric traction motor can be used while still obtaining a sufficiently low torque on the first and second countershafts.

Optionally in some examples, including in at least one preferred example, the input shaft gearwheel is press-fitted to the input shaft. A technical benefit may include that a simplified manufacturing process can be used for the input shaft and the input shaft gear wheel. Each component can be optimized individually in terms of material, treatment, and precision, making it easier to modify or replace one part without redesigning the entire assembly. Further, a press-fitted gearwheel can be removed and replaced without the need to replace the entire shaft. This may be particularly advantageous for maintenance, as wear on the input shaft gearwheel or the input shaft can be addressed individually, thereby reducing downtime and repair costs compared to e.g. an integrally formed gear, where the whole unit would need to be replaced.

Optionally in some examples, including in at least one preferred example, the first gear state has a higher speed reduction to the output shaft compared to the speed reduction of the second gear state. A technical benefit may include that two distinct and different gear states may be obtained. The second gear state may in fact provide for a speed increase to the differential gear arrangement, and in turn to the output shaft. Also, the first gear state may provide a slight speed increase, but preferably a lower speed increase compared to a speed increase of the second gear state.

Optionally in some examples, including in at least one preferred example, the input shaft is coaxial to the output shaft. A technical benefit may include that a relatively compact transmission arrangement may be obtained.

Optionally in some examples, including in at least one preferred example, the first and second countershafts are arranged on a respective side of the output shaft and spaced apart from each other by 180 degrees. A technical benefit may include that radial loads may be cancelled.

Optionally in some examples, including in at least one preferred example, the first countershaft gearwheel of the first countershaft is integrally formed with the first countershaft. A technical benefit may include that an interface between the first countershaft gearwheel of the first countershaft and the first countershaft may be eliminated. Hereby, an increased strength and rigidity may be obtained whereby the assembly may withstand a relatively high torque. Also, by integrally forming the first countershaft gearwheel of the first countershaft with the first countershaft, there may be a reduced risk of misalignment, whereby improved concentricity and balance may be obtained.

Optionally in some examples, including in at least one preferred example, the first countershaft gearwheel of the second countershaft is integrally formed with the second countershaft. A technical benefit may include that an interface between the first countershaft gearwheel of the second countershaft and the second countershaft may be eliminated. Hereby, an increased strength and rigidity may be obtained whereby the assembly may withstand a relatively high torque. Also, by integrally forming the first countershaft gearwheel of the second countershaft with the second countershaft, there may be a reduced risk of misalignment, whereby improved concentricity and balance may be obtained.

Optionally in some examples, including in at least one preferred example, the second countershaft gearwheel of the first countershaft is integrally formed with the first countershaft. A technical benefit may include that an interface between the second countershaft gearwheel of the first countershaft and the first countershaft may be eliminated. Hereby, an increased strength and rigidity may be obtained whereby the assembly may withstand a relatively high torque. Also, by integrally forming the second countershaft gearwheel of the first countershaft with the first countershaft, there may be a reduced risk of misalignment, whereby improved concentricity and balance may be obtained.

Optionally in some examples, including in at least one preferred example, the second countershaft gearwheel of the second countershaft is integrally formed with the second countershaft. A technical benefit may include that an interface between the second countershaft gearwheel of the second countershaft and the second countershaft may be eliminated. Hereby, an increased strength and rigidity may be obtained whereby the assembly may withstand a relatively high torque. Also, by integrally forming the second countershaft gearwheel of the second countershaft with the second countershaft, there may be a reduced risk of misalignment, whereby improved concentricity and balance may be obtained.

Optionally in some examples, including in at least one preferred example, the differential gear arrangement comprises a differential gearwheel connectable to each the first and second countershaft gearwheels of the first and second countershafts via the clutch. A technical benefit may include that a further gear stage is provided.

Optionally in some examples, including in at least one preferred example, the first countershaft gearwheel of the first countershaft and the first countershaft gearwheel of the second countershaft have same shape and dimensions. A technical benefit may include that the respective torque ratio from the first and second countershafts to the differential gear arrangement is the same for the first gear state.

Optionally in some examples, including in at least one preferred example, the second countershaft gearwheel of the first countershaft and the second countershaft gearwheel of the second countershaft have same shape and dimensions. A technical benefit may include that the respective torque ratio from the first and second countershafts to the differential gear arrangement is the same for the second gear state.

Optionally in some examples, including in at least one preferred example, the clutch is a single clutch. A technical benefit may include that a simple and less expensive clutch can be used compared to using a dual clutch arrangement with complex control.

Optionally in some examples, including in at least one preferred example, the clutch is a dog clutch. A technical benefit may include that a dog clutch may provide a direct, positive engagement between two rotating components, locking these components to each other without slippage. Using a dog clutch may allow the transmission arrangement to transmit a relatively high torque without the risk of energy loss caused by e.g. friction.

According to a second aspect, there is provided a driveline comprising a transmission arrangement according to any one of the examples described above in relation to the first aspect, and an electric traction motor connected to the input shaft of the transmission arrangement.

Optionally in some examples, including in at least one preferred example, the electric traction motor is coaxial to the output shaft. A technical benefit may include that a compact driveline may be obtained. Such compact driveline may have a reduced weight which is also beneficial from a power efficiency perspective. Optionally, the electric traction motor may be coaxial also to the input shaft.

Optionally in some examples, including in at least one preferred example, the driveline further comprises a driveline housing, the electric traction motor and the transmission arrangement being arranged inside the housing. A technical benefit may include that the electric traction motor and the transmission arrangement can be well protected from damage. Also, arranging these components inside the same housing may reduce costs compared to the use of separate housings.

Further effects and features of the second aspect are largely analogous to those described above in relation to the first aspect.

According to a third aspect, there is provided a vehicle comprising a driveline according to any one of examples described above in relation to the second aspect.

Effects and features of the third aspect are largely analogous to those described above in relation to the first and second aspects.

The disclosed aspects, examples, and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
Fig. 1 is an exemplary illustration of a vehicle according to an example,
Fig. 2 is an exemplary illustration of a driveline according to an example,
Fig. 3 is an exemplary illustration of the driveline when the transmission arrangement assumes a first gear state according to an example,
Fig. 4 is an exemplary illustration of the driveline when the transmission arrangement assumes a second gear state according to an example, and
Fig. 5 is an exemplary illustration of the driveline when the transmission arrangement assumes a neutral gear state according to an example.

### DETAILED DESCRIPTION

The detailed description set forth below provides information and examples of the disclosed technology with sufficient detail to enable those skilled in the art to practice the disclosure.

The following disclosure aims at mitigating the problem of bulky and complex transmission arrangements for differential gear arrangements. A technical benefit may include that improved characteristics of the torque transmission to the wheels of the vehicle may be obtained, where a continuous and relatively high torque to the wheels of the vehicle may be provided.

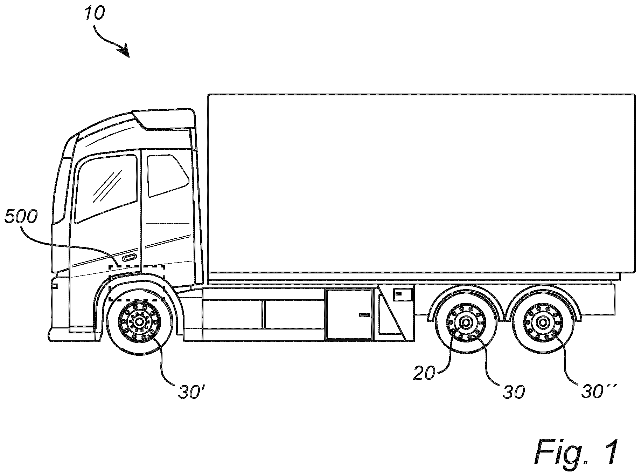

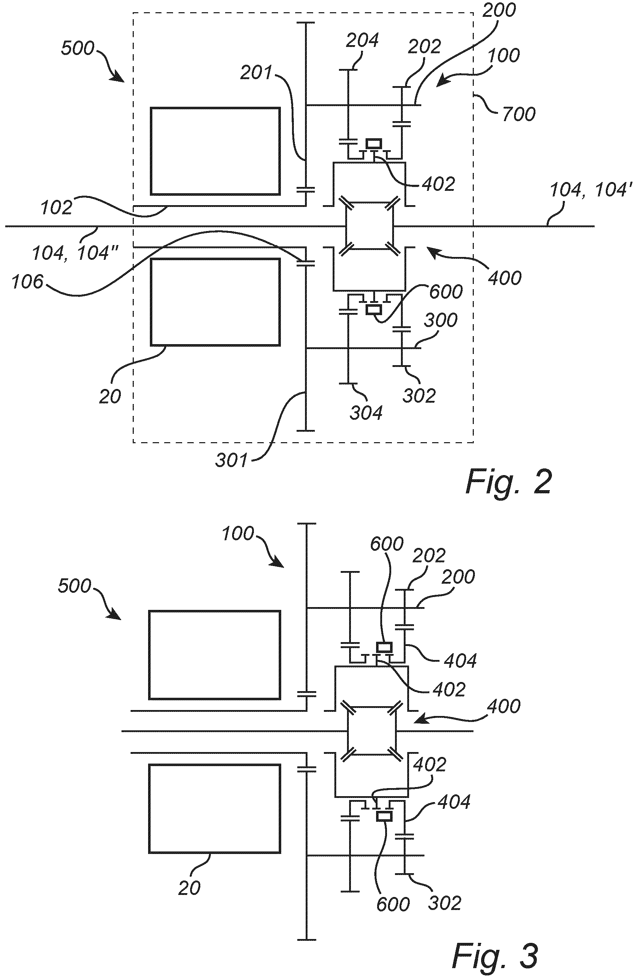

Turning to Fig. 1 which is an exemplary illustration of a vehicle 10 according to an example. The exemplified vehicle 10 may comprise an electric traction motor 20 for propulsion of the vehicle 10. The vehicle 10 comprises a driveline 500. The driveline 500 comprises the electric traction motor 20 and a transmission arrangement (100 in Figs. 2 - 5), where the electric traction motor 20 is connected to the wheels 30 of the vehicle 10 via the transmission arrangement. Hence, the transmission arrangement is arranged between the electric traction motor 20 and the wheels 30 of the vehicle. In Fig. 1, the electric traction motor 20 is exemplified as connected to the foremost pair of rear wheels 30 of the vehicle 10 (6 by 2 configuration) but it should be readily understood that the electric machine may alternatively or additionally be connected to a pair of front wheels 30' or to the rearmost pair of rear wheels 30". The vehicle 10 may thus comprise more than one electric machine.

In order to describe the driveline 500 in further detail, reference is made to Fig. 2 which is an exemplary illustration of the driveline 500 according to an example. As indicated above, the driveline 500 comprises the electric traction motor 20, a transmission arrangement 100 and a driveline housing 700 in which the electric traction motor 20 and the transmission arrangement 100 are accommodated. In particular, the transmission arrangement 100 comprises an input shaft 102 connected to the electric traction motor 20, and an output shaft 104 connected to the wheels 30 of the vehicle 10, where the input shaft 102 is arranged coaxial to the output shaft 104. In the exemplification depicted in Fig. 2, the output shaft 104 is formed by a first 104' and a second 104" output shaft. The first 104' and second 104" output shafts may spin independently from each other. Also, the electric traction motor 20 is also exemplified as arranged coaxial to the output shaft 104. A torque generated by the electric traction motor 20 is hereby transmitted to the transmission arrangement 100 via the input shaft 102, and transmitted to the wheels 30 via the output shaft 104.

The transmission arrangement 100 further comprises a first countershaft 200. The first countershaft 200 is drivingly connected to the input shaft 102. In the exemplification of Fig. 2, the input shaft 102 comprises an input shaft gearwheel 106 connected to the first countershaft 200. The input shaft gearwheel 106 may be press-fitted to the input shaft 102. Optionally, the input shaft gearwheel 106 may be integrally formed with the input shaft 102 or connected to the input shaft 102 by a splines interface, etc. In the exemplification, the first countershaft 200 comprises a gearwheel 201 arranged in meshing engagement with the input shaft gearwheel 106. According to the example depicted in Fig. 2, the gearwheel 201 of the first countershaft 200 is larger compared to the input shaft gearwheel 106, whereby a reduction gear state is formed between the input shaft 102 and the first countershaft 200. In detail, the input shaft 102 rotates faster than the first countershaft 200.

The first countershaft 200 also comprises a first countershaft gear wheel 202 and a second countershaft gearwheel 204 arranged on the first countershaft 200. Each of the first 202 and second 204 countershaft gearwheels of the first countershaft 200 may be integrally formed with the first countershaft 200. Other alternatives are also conceivable, such as press-fitting the first 202 and second 204 countershaft gearwheels to the first countershaft 200, etc.

The transmission arrangement 100 also comprises a second countershaft 300. The second countershaft 300 is arranged on an opposite side of the output shaft 104 compared to the position of the first countershaft 200. In the example depicted in Fig. 2, the first 200 and second 300 countershafts are spaced apart from each by 180 degrees.

The second countershaft 300 is, in a similar vein as the first countershaft 200, drivingly connected to the input shaft 102. In the exemplification of Fig. 2, the input shaft gearwheel 106 is connected to the second countershaft 300. In the exemplification, the second countershaft 300 comprises a gearwheel 301 arranged in meshing engagement with the input shaft gearwheel 106. Hence, the input shaft gearwheel 106 is arranged in meshing engagement with the gearwheels 201, 301 of each of the first 200 and second 300 countershafts. According to the example depicted in Fig. 2, the gearwheel 301 of the second countershaft 300 is larger compared to the input shaft gearwheel 106, whereby a reduction gear state is formed between the input shaft 102 and the second countershaft 300. In detail, the input shaft 102 rotates faster than the second countershaft 300. Preferably, the gearwheels 201, 301 of the first 200 and second 300 countershafts may have the same shape and dimensions. Thus, the same speed reduction is obtained for both of the first 200 and second 300 countershafts.

The second countershaft 300 also comprises a first countershaft gear wheel 302 and a second countershaft gearwheel 304 arranged on the second countershaft 300. Each of the first 302 and second 304 countershaft gearwheels of the second countershaft 300 may be integrally formed with the second countershaft 300. Other alternatives are also conceivable, such as press-fitting the first 302 and second 304 countershaft gearwheels to the second countershaft 300, etc.

The first countershaft gearwheel 202 of the first countershaft 200 and the first countershaft gearwheel 302 of the second countershaft 300 may be of same size and dimension. In a similar vein, the second countershaft gearwheel 204 of the first countershaft 200 and the second countershaft gearwheel 304 of the second countershaft 300 may be of same size and dimension. However, the size and dimensions of the first countershaft gear wheels 202, 302 are different compared to the size and dimensions of the second countershaft gear wheels 204, 304. Preferably, the second countershaft gear wheels 204, 304 may be larger in size compared to the first countershaft gear wheels 202, 302.

Furthermore, the transmission arrangement 100 also comprises a differential gear arrangement 400. The differential gear arrangement 400 is connected to the output shaft 104, or output shafts 104', 104", of the transmission arrangement 400. The differential gear arrangement 400 comprises a differential gearwheel 402. As will be described in further detail below with reference to Figs. 3-5, the differential gearwheel 402 is selectively connectable to the above described first 202, 302 and second 204, 304 gearwheels of the first 200 and second 300 countershafts.

The transmission arrangement 100 also comprises a clutch 600. The clutch 600 is arranged concentrically to the differential gear arrangement 400 and is arranged to control the transmission arrangement 100 between two gear states as well as a neutral gear state. The clutch 600 may preferably be a single clutch arranged in the form of a dog clutch.

In order to describe a first gear state of the transmission arrangement 100, reference is made to Fig. 3. Hence, Fig. 3 is an exemplary illustration of the driveline 500 when the transmission arrangement 100 assumes the first gear state according to an example. In Fig. 3, the clutch 600 is connected to the differential gearwheel 402 as well as to a first gear 404, which first gear 404 is arranged in meshing engagement with the first countershaft gearwheel 202 of the first countershaft 200. The first gear 404 is also arranged in meshing engagement with the first countershaft gearwheel 302 of the second countershaft 300. The clutch 600 hereby connects the differential gear arrangement 400 to the first countershaft 200 via the first countershaft gearwheel 202 of the first countershaft 200, as well as to the second countershaft 300 via the first countershaft gearwheel 302 of the second countershaft 300 to assume the first gear state. A torque from the electric traction motor 20 is thus transmitted to the differential gear arrangement 400 via the first countershaft gear wheels 202, 302 of the first 200 and second 300 countershafts, and subsequently transmitted to the output shaft 104. No torque is transmitted to the differential gear arrangement 400 via the second countershaft gearwheels 204, 304 of the first 200 and second 300 countershafts.

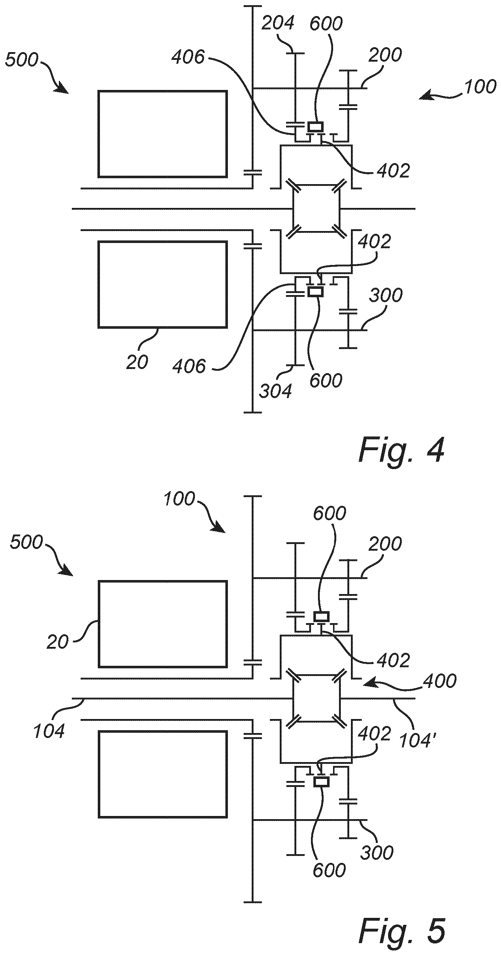

Reference is made to Fig. 4 which is an exemplary illustration of the driveline 500 when the transmission arrangement 100 assumes a second gear state according to an example. In Fig. 4, the clutch 600 is connected to the differential gearwheel 402 as well as to a second gear 406, which second gear 406 is arranged in meshing engagement with the second countershaft gearwheel 204 of the first countershaft 200. The clutch 600 also connects the differential gearwheel 402 to the second countershaft 300, as the second gear 406 is also arranged in meshing engagement with the second countershaft gearwheel 304 of the second countershaft 300. The clutch 600 hereby connects the differential gear arrangement 400 to the first countershaft 200 via the second countershaft gearwheel 204 of the first countershaft 200, as well as to the second countershaft 300 via the second countershaft gearwheel 304 of the second countershaft 300 to assume the second gear state. A torque from the electric traction motor 20 is thus transmitted to the differential gear arrangement 400 via the second countershaft gear wheels 204, 304 of the first 200 and second 300 countershafts, and subsequently transmitted to the output shaft 104. No torque is transmitted to the differential gear arrangement 400 via the first countershaft gearwheels 202, 302 of the first 200 and second 300 countershafts.

The transmission arrangement 100 can hereby, by means of the clutch 600, assume the first and second gear states, where the first and second gear states have different transmission gear ratio to the output shaft 104 . In particular, the first gear state may provide a larger speed reduction to the differential gear arrangement 400 compared to speed reduction of the second gear state. The second gear state may in fact provide for a speed increase to the differential gear arrangement, and in turn to the output shaft. The transmission arrangement 100 is also configured to assume a neutral gear state and reference is now made to Fig. 5 for describing this neutral gear state in further detail. As can be seen in Fig. 5, the clutch 600 is only connected to the differential gearwheel 402. Hence, the clutch 600 is disconnected from the first 200 and second 300 countershafts. In further detail, a torque from the electric traction motor 20 will not be transmitted to the differential gear arrangement 400. Instead, the differential gear arrangement 400 will only rotate together with the rotation of the wheels, i.e. along with the rotation of the output shaft 104.

### EXAMPLES LIST

Example 1: A transmission arrangement for an electrically propelled vehicle, the transmission arrangement comprising: an input shaft configured to be connected to an electric traction motor, a first countershaft and a second countershaft, each of the first and second countershafts being drivingly connected to the input shaft, wherein each of the first and second countershafts comprises a respective first and second countershaft gearwheel, a differential gear arrangement connected to an output shaft of the transmission arrangement, and a clutch arranged concentrically to the differential gear arrangement, wherein the transmission arrangement is configured to assume a first gear state in which the clutch connects the first countershaft gearwheel of each of the first and second countershafts to the differential gear arrangement, and a second gear state in which the clutch connects the second countershaft gearwheel of each of the first and second countershafts to the differential gear arrangement.

Example 2. The transmission arrangement of example 1, wherein the transmission arrangement is further configured to assume a neutral gear state in which the clutch is disconnected from both of the first and second countershaft gearwheels of the first and second countershafts.

Example 3. The transmission arrangement of any one of examples 1 or 2, wherein the input shaft comprises an input shaft gearwheel connected to each of the first and second countershafts.

Example 4. The transmission arrangement of example 3, wherein each of the first and second countershaft comprises a gearwheel arranged in meshing engagement with the input shaft gearwheel.

Example 5. The transmission arrangement of example 4, wherein the meshing engagement between the input shaft gearwheel and the gearwheels of the first and second countershaft form a respective reduction gear state.

Example 6. The transmission arrangement of any one of examples 3-5, wherein the input shaft gearwheel is press-fitted to the input shaft.

Example 7. The transmission arrangement of any one of the preceding examples, wherein the first gear state has a higher speed reduction to the output shaft compared to the speed reduction of the second gear state.

Example 8. The transmission arrangement of any one of the preceding examples, wherein the input shaft is coaxial to the output shaft.

Example 9. The transmission arrangement of any one of the preceding examples, wherein the first and second countershafts are arranged on a respective side of the output shaft and spaced apart from each other by 180 degrees.

Example 10. The transmission arrangement of any one of the preceding examples, wherein the first countershaft gearwheel of the first countershaft is integrally formed with the first countershaft.

Example 11. The transmission arrangement of any one of the preceding examples, wherein the first countershaft gearwheel of the second countershaft is integrally formed with the second countershaft.

Example 12. The transmission arrangement of any one of the preceding examples, wherein the second countershaft gearwheel of the first countershaft is integrally formed with the first countershaft.

Example 13. The transmission arrangement of any one of the preceding examples, wherein the second countershaft gearwheel of the second countershaft is integrally formed with the second countershaft.

Example 14. The transmission arrangement of any one of the preceding examples, wherein the differential gear arrangement comprises a differential gearwheel connectable to each the first and second countershaft gearwheels of the first and second countershafts via the clutch.

Example 15. The transmission arrangement of any one of the preceding examples, wherein the first countershaft gearwheel of the first countershaft and the first countershaft gearwheel of the second countershaft have same shape and dimensions.

Example 16. The transmission arrangement of any one of the preceding examples, wherein the second countershaft gearwheel of the first countershaft and the second countershaft gearwheel of the second countershaft have same shape and dimensions.

Example 17. The transmission arrangement of any one of the preceding examples, wherein the clutch is a single clutch.

Example 18. The transmission arrangement of any one of the preceding examples, wherein the clutch is a dog clutch.

Example 19. A driveline comprising a transmission arrangement according to any one of the preceding examples, and an electric traction motor connected to the input shaft of the transmission arrangement.

Example 20. The driveline of example 19, wherein the electric traction motor is coaxial to the output shaft.

Example 21. The driveline of any one of examples 19 or 20, further comprising a driveline housing, the electric traction motor and the transmission arrangement being arranged inside the housing.

Example 22. A vehicle comprising a driveline according to any one of examples 19-21.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A transmission arrangement (100) for an electrically propelled vehicle, the transmission arrangement comprising:
- an input shaft (102) configured to be connected to an electric traction motor (20),
- a first countershaft (200) and a second countershaft (300), each of the first and second countershafts being drivingly connected to the input shaft, wherein each of the first and second countershafts comprises a respective first (202, 302) and second (204, 304) countershaft gearwheel,
- a differential gear arrangement (400) connected to an output shaft (104) of the transmission arrangement, and
- a clutch (600) arranged concentrically to the differential gear arrangement,
wherein the transmission arrangement (100) is configured to assume a first gear state in which the clutch connects the first countershaft gearwheel of each of the first and second countershafts to the differential gear arrangement, and a second gear state in which the clutch connects the second countershaft gearwheel of each of the first and second countershafts to the differential gear arrangement.

2. The transmission arrangement of claim 1, wherein the transmission arrangement is further configured to assume a neutral gear state in which the clutch is disconnected from both of the first and second countershaft gearwheels of the first and second countershafts.

3. The transmission arrangement of any one of claims 1 or 2, wherein the input shaft comprises an input shaft gearwheel connected to each of the first and second countershafts.

4. The transmission arrangement of claim 3, wherein each of the first and second countershaft comprises a gearwheel arranged in meshing engagement with the input shaft gearwheel.

5. The transmission arrangement of claim 4, wherein the meshing engagement between the input shaft gearwheel and the gearwheels of the first and second countershaft form a respective reduction gear state.

6. The transmission arrangement of any one of claims 3 - 5, wherein the input shaft gearwheel is press-fitted to the input shaft.

7. The transmission arrangement of any one of the preceding claims, wherein the first gear state has a higher speed reduction to the output shaft compared to the speed reduction of the second gear state.

8. The transmission arrangement of any one of the preceding claims, wherein the second countershaft gearwheel of the first countershaft is integrally formed with the first countershaft.

9. The transmission arrangement of any one of the preceding claims, wherein the second countershaft gearwheel of the second countershaft is integrally formed with the second countershaft.

10. The transmission arrangement of any one of the preceding claims, wherein the differential gear arrangement comprises a differential gearwheel connectable to each the first and second countershaft gearwheels of the first and second countershafts via the clutch.

11. The transmission arrangement of any one of the preceding claims, wherein the clutch is a single clutch.

12. A driveline comprising a transmission arrangement according to any one of the preceding claims, and an electric traction motor connected to the input shaft of the transmission arrangement.

13. The driveline of claim 12, wherein the electric traction motor is coaxial to the output shaft.

14. The driveline of any one of claims 12 or 13, further comprising a driveline housing, the electric traction motor and the transmission arrangement being arranged inside the housing.

15. A vehicle comprising a driveline according to any one of claims 12 - 14.
